# EUROPÄISCHE PATENTSCHRIFT

(11) **EP 2 011 612 B1**
(45) Veröffentlichungstag und Bekanntmachung des Hinweises auf die Patenterteilung: **08.09.2010**
(21) Anmeldenummer: 07012998.6
(22) Anmeldetag: 03.07.2007
(51) Int. Cl.: B27B 5/06, B27B 25/04

(54) **Durchlaufsägevorrichtung**
Throughput saw device
Dispositif de scie de passage

(43) Veröffentlichungstag der Anmeldung: 07.01.2009
(73) Patentinhaber: Homag Holzbearbeitungssysteme AG, 72296 Schopfloch (DE)
(72) Erfinder: Lorenz, Andreas, 72280 Dornstetten (DE); Gauss, Achim, 72280 Dornstetten (DE)
(74) Vertreter: HOFFMANN EITLE

(56) Entgegenhaltungen:
- DD-A1- 118 561
- DE-A1- 3 423 856
- FR-A5- 2 032 070
- US-A- 2 399 822
- US-A- 5 368 080
- US-A1- 2005 189 040

## Beschreibung

### Technisches Gebiet

Die Erfindung betrifft eine Durchlaufsägevorrichtung zum Aufteilen oder Nuten von bevorzugt platten- oder leistenförmigen Werkstücken, die bevorzugt zumindest teilweise aus Holz, Holzwerkstoffen, Kunststoff oder dergleichen bestehen, nach dem Oberbegriff von Anspruch 1.

### Stand der Technik

Durchlaufsägen zum Aufteilen von Plattenwerkstoffen der eingangs genannten Art sind im Stand der Technik in vielfältigen Ausgestaltungen bekannt. Eine solche Vorrichtung ist beispielsweise in einem Prospekt der Anmelderin "Sägenprogramm FSL und FSQ zum Aufteilen von Plattenwerkstoffen" beschrieben. Bei dieser Sägevorrichtung sind in Durchlaufrichtung vor und hinter den Sägeelementen sogenannte Mangelwalzen zum Fördern der Werkstücke angeordnet, d.h. Walzenpaare, die sich über die gesamte Breite der Durchlaufsäge erstrecken.

Die bekannten Durchlaufsägen haben sich in der Praxis bewährt. Allerdings hat sich gezeigt, dass die Anforderungen an eine sehr genaue Positionierung und Führung der zu sägenden Werkstücke immer höher werden, beispielsweise beim Zusägen von Fußbodenpaneelen, bei denen der Sägeschnitt exakt auf das Dekor der jeweiligen zu sägenden Werkstücke abgestimmt werden muss. Diese Anforderungen lassen sich mit bekannten Sägevorrichtungen mit Mangelwalzen nicht oder jedenfalls nicht dauerhaft erfüllen.

Vor diesem Hintergrund ist auch versucht worden, die zu sägenden Werkstücke mittels eines Saugportals zufördern, das die Werkstücke vor der Säge ansaugt, anhebt, und über eine Reihe von Sägeelemente führt, um das Werkstück in Streifen aufzuteilen. Allerdings besitzt diese Konstruktion den Nachteil, dass das Saugportal nach dem Arbeitshub einen leeren Rückhub ausführen muss, so dass sich ein begrenzter Durchsatz ergibt.

Ferner offenbaren die US 2,399,822 A und die DE 3423856 A1 eine Sägevorrichtung nach dem Oberbegriff von Anspruch 1.

### Darstellung der Erfindung

Es ist daher Aufgabe der vorliegenden Erfindung, eine Durchlaufsägevorrichtung der eingangs genannten Art bereitzustellen, die ein präzises Führen der zu sägenden Werkstücke und einen hohen Durchsatz ermöglicht.

Diese Aufgabe wird erfindungsgemäß durch eine Durchlaufsägevorrichtung nach Anspruch 1 gelöst. Besonders vorteilhafte Weiterbindungen der Erfindung sind in den abhängigen Ansprüchen angegeben.

Der Erfindung liegt der Gedanke zugrunde, eine Führung der zu sägenden Werkstücke auch dort sicherzustellen, wo die größten Kräfte auf die Werkstücke wirken. Zu diesem Zweck ist erfindungsgemäß vorgesehen, dass sich die Führungseinrichtung bei Betrachtung senkrecht zur Durchlaufebene zumindest abschnittsweise in den Bereich neben mindestens ein Sägeelement, bei mehreren Sägeelementen somit in den Bereich zwischen mindestens zwei Sägeelementen erstreckt. Auf diese Weise wird eine deutlich stabilere und kontinuierlichere Führung der zu sägenden Werkstücke erreicht, so dass sich eine hochpräzise Schnittführung ausführen lässt. Dabei kann weiterhin ein echter Durchlaufbetrieb mit entsprechend hohem Durchsatz aufrechterhalten werden. Um neben einer hohen Präzision auch eine sehr hohe Variabilität der erfindunsgemäßen Durchlaufsägevorrichtung zu erzielen, ist gemäß der Erfindung vorgesehen, dass zumindest einige Sägeelemente quer zur Durchlaufrichtung verstellbar sind. Darüber hinaus haben die Erfinder auch festgestellt, dass eine erfindungsgemäße Führungseinrichtung auch weniger verschleiß- und verschmutzungsanfällig ist als beispielsweise Mangelwalzen, so dass die präzise Führung dauerhaft aufrechterhalten werden kann.

Die Führungseinrichtung kann im Rahmen der vorliegenden Erfindung auf unterschiedlichste Art und Weise ausgestaltet sein und beispielsweise auch als reine Führungseinrichtung dienen (z.B. Gleitfläche mit Luftaustrittsöffnungen), wobei in diesem Falle eine separate Fördereinrichtung vorzusehen wäre.

Gemäß einer Weiterbildung der Erfindung ist jedoch vorgesehen, dass die Führungseinrichtung zumindest abschnittsweise mindestens ein Förderelement aufweist. Hierdurch ergibt sich eine besonders einfache Konstruktion der erfindungsgemäßen Durchlaufsäge, und die Förderkräfte können besonders unmittelbar und in einem Bereich nahe zu den Sägekräften auf die zu sägenden Werkstücke aufgebracht werden. Dabei ist es besonders bevorzugt, dass mindestens eine Förderelement als endlos umlaufendes Förderelement ausgebildet ist, beispielsweise als Riemen, (Magnet-)Kette oder dergleichen, sodass sich ein besonders kontinuierlicher Durchlaufbetrieb ergibt. Dabei ist zu beachten, dass das mindestens eine Förderelement im Rahmen der vorliegenden Erfindung an der Stützeinrichtung und/oder der Oberdruckeinrichtung der Führungseinrichtung angeordnet sein kann.

Gemäß einer Weiterbildung der Erfindung ist ferner vorgesehen, dass sich mindestens ein Förderelement bei Betrachtung senkrecht zur Durchlaufrichtung in den Bereich neben mindestens ein Sägeelement, bei mehreren Sägeelementen somit in den Bereich zwischen mindestens zwei Sägeelementen erstreckt, um die beim Sägen auftretenden Kräfte unmittelbar aufzunehmen.

Gemäß einer Weiterbildung der Erfindung ist darüber hinaus vorgesehen, dass die Führungseinrichtung mindestens ein Geradführungselement aufweist, das dazu vorgesehen ist, in eine im jeweiligen Werkstücke vorgesehene Nut einzugreifen. Hierdurch ergibt sich ein formschlüssiger Eingriff zwischen Führungseinrichtung und Werkstück, sodass ein Verrutschen des Werkstücks praktisch ausgeschlossen und eine sehr hohe Präzision erreicht wird.

Gemäß einer Weiterbildung der Erfindung ist weiterhin vorgesehen, dass die Sägeelemente in mehreren Gruppen von Sägeelementen angeordnet sind, deren Drehachsen in Durchlaufrichtung voneinander beabstandet sind. Hierdurch ergibt sich, dass die zu sägenden Werkstücke in Durchlaufrichtung sukzessive in Streifen aufgeteilt werden, sodass der noch nicht gesägte Hohlplattenkörper, der sich dann vorteilhaft im Bereich der Führungseinrichtung befindet, weiterhin als Basis für ein genaues Aufteilmaß und sicheres Führen vorhanden ist. Dabei ist es besonders bevorzugt, dass die Sägeelemente aufeinanderfolgender Gruppen bei einer gedachten Bewegung in Durchlaufrichtung einen schrittweise kleiner werdenden Abstand quer zur Durchlaufrichtung besitzen. Hierdurch werden einzelne Streifen von dem jeweiligen Werkstück sukzessive von außen her abgetrennt, sodass das Werkstück im mittleren Bereich noch vollständig und unversehrt als Basis für ein genaues Aufteilmaß und eine genaues Führen vorhanden ist.

Ferner hat es sich im Hinblick auf eine gleichmäßige Beanspruchung der zu sägenden Werkstücke als vorteilhaft erwiesen, dass gemäß einer Weiterbildung der Erfindung zumindest einige Sägeelemente symmetrisch in Bezug auf die Führungseinrichtung angeordnet sind. Hierdurch heben sich zumindest einige Komponenten der auf die Werkstücke aufgebrachten Sägekräfte gegenseitig auf, sodass die Gefahr von Relativverschiebungen der zu sägenden Werkstücke vermindert wird.

Darüber hinaus ist gemäß einer Weiterbildung der Erfindung vorgesehen, dass in Durchlaufrichtung stromaufwärts der Führungseinrichtung eine Ausrichtstation angeordnet ist. Hierdurch können die jeweiligen zusammenhängenden Werkstücke sicher und präzise in eine gewünschte Ausrichtung gebracht und in dieser Ausrichtung an die Führungseinrichtung übergeben werden, sodass keine Nachjustierung erforderlich ist.

Wie anhand der nachfolgenden ausführlichen Beschreibung noch besser ersichtlich werden wird, kann die Führungseinrichtung im Rahmen der vorliegenden Erfindung beispielsweise als sehr schmaler Förderstrang ausgebildet sein, wie er beispielsweise bei Doppelendprofilern zum Einsatz kommt. Um bei einer derartigen Konstruktion eine übermäßige Verformung ("Schüsseln") der zu sägenden Werkstücke zu verhindern sowie die aus dem Werkstück erstellten Streifen sicher abzuführen, ist gemäß einer Weiterbildung der Erfindung vorgesehen, dass die Durchlaufsägevorrichtung mindestens eine zweite Führungseinrichtung aufweist, die in Durchlaufrichtung stromaufwärts und/oder stromabwärts angeordnet ist und zumindest Stützelemente aufweist.

Kurze Beschreibung der Zeichnungen
- Fig. 1: zeigt schematisch eine teilweise freigeschnittene Seitenansicht einer Durchlaufsägevorrichtung als bevorzugte Ausführungsform der Erfindung;
- Fig. 2: zeigt schematisch eine Draufsicht der in Fig. 1 gezeigten Durchlaufsägevorrichtung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

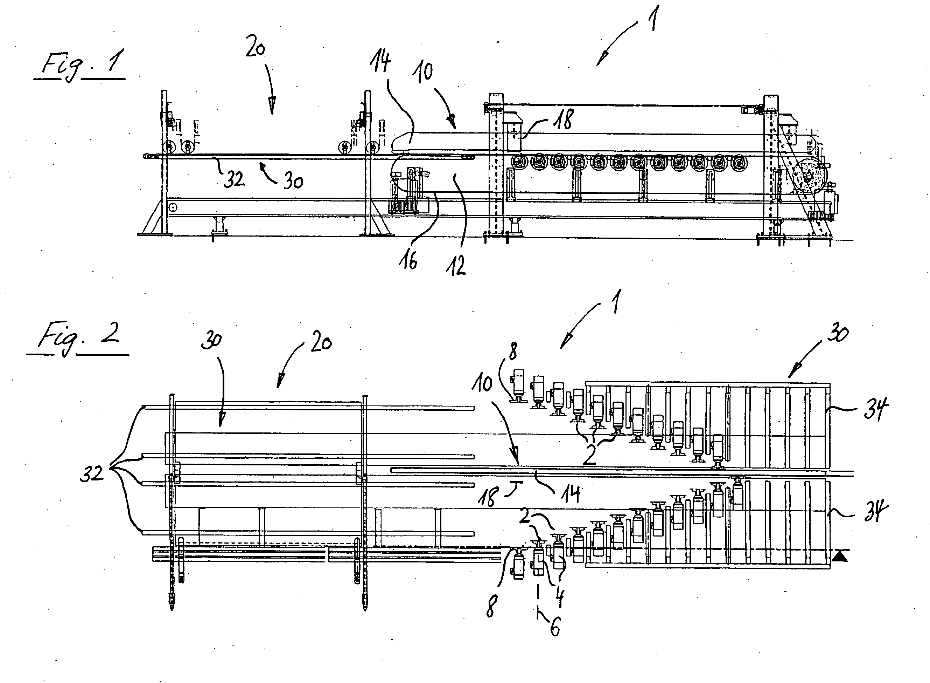

Eine Durchlaufsägevorrichtung 1 als bevorzugte Ausführungsform der vorliegenden Erfindung ist in Fig. 1 und 2 schematisch dargestellt. Die Durchlaufsägevorrichtung 1 dient in der vorliegenden Ausführungsform zum Aufteilen und/oder Nuten von Werkstücken, die beispielsweise platten-oder leistenförmig sind und zumindest teilweise aus Holz-, Holzwerkstoffen, Kunststoff oder dergleichen bestehen, obgleich die vorliegende Erfindung nicht hierauf beschränkt ist.

Die Durchlaufsägevorrichtung 1 besitzt eine sich in Durchlaufrichtung (von links nach rechts in Fig. 1 und Fig. 2) erstreckende Führungseinrichtung 10 mit einer Stützeinrichtung 12 und einer Oberdruckeinrichtung 14, zwischen denen ein Führungsspalt zum Führen der zu sägenden Werkstücke gebildet ist. In der vorliegenden Ausführungsform weist die Stützeinrichtung 12 eine endlos umlaufende Transportkette bzw. einen endlos umlaufenden Transportriemen 16 auf, obgleich auch andere Förderelemente zum Einsatz kommen können und auch Lösungen ohne Förderelemente möglich sind, beispielsweise indem die Werkstücke auf der Stützeinrichtung 12 auf einem Luftkissen oder lediglich durch Reibung geführt werden. Dieselben Ausführungen gelten für die Oberdruckeinrichtung 14, die in der vorliegenden Ausführungsform ebenfalls ein nicht näher gezeigtes, endlos umlaufendes Förderelement aufweist.

Die Führungseinrichtung 10 ist in der vorliegenden Ausführungsform als einzelner, schmaler Förderstrang gezeigt, obgleich im Rahmen der vorliegenden Erfindung selbstverständlich auch mehrere Förderstränge angeordnet sein können.

Die Führungswirkung der Führungseinrichtung 10 kann darüber hinaus durch eines oder mehrere Geradführungselement(e) 18 unterstütz werden, das dazu vorgesehen ist, in eine im jeweiligen Werkstück vorgesehende Nut einzugreifen. Dabei ist in der vorliegenden Ausführungsform ein Führungsschwert 18 oberhalb der durchlaufenden Werkstücke angeordnet, obgleich die Anordnung des bzw. der Geradführungselement(e) 18 vielfältig variiert werden kann.

In Durchlaufrichtung rechts und links neben der Führungseinrichtung 10 sind mehrere Sägeelemente 2 angeordnet, die jeweils einen Antrieb 4 besitzen, sodass die Sägeelemente 2 um eine jeweilige Drehachse 6 drehend antreibbar sind. Dabei ist zu beachten, dass zwei oder mehr (ggf. alle) Sägeelemente 2 auch jeweils einen gemeinsamen Antrieb besitzen können.

Wie in Fig. 2 am besten zu erkennen ist, erstreckt sich die Führungseinrichtung 10 bei Betrachtung senkrecht zur Durchlaufebene zwischen jeweils gegenüberliegenden Sägeelementen 2. Dabei ist zu beachten, dass im Rahmen der vorliegenden Erfindung auch ein einzelnes Sägeelement 2 zum Einsatz kommen kann. In diesem Falle erstreckt sich die Führungseinrichtung 10 bei Betrachtung senkrecht zur Durchlaufebene in den Bereich neben mindestens ein Sägeelement.

Ferner ist in Fig. 2 zu erkennen, dass die Sägeelemente 2 jeweils paarweise angeordnet sind, sodass jedes Paar eine Gruppe von Sägeelementen 2 bildet, die an Drehachsen 6 in Durchlaufrichtung voneinander beabstandet sind. Bei einer alternativen Ausführungsform (nicht gezeigt), können die Sägeelemente jedoch auch in einer Reihe angeordnet sein. Dabei besitzen die Sägeelemente auch zwei aufeinanderfolgende Gruppen bei einer gedachten Bewegung in Durchlaufrichtung einen schrittweise kleiner werdenden Abstand quer zur Durchlaufrichtung. Dies führt dazu, dass die jeweiligen Streifen sukzessive von den zu sägenden Werkstücken abgetrennt werden, während im Bereich der Führungseinrichtung 10 der Werkstückkörper weiterhin als Basis für ein sicheres Führen und ein genaues Aufteilmaß vorhanden ist. Um hierbei eine gleichmäßige Kraftverteilung und ein teilweises gegenseitiges Aufheben der Sägekräfte zu erzielen, sind die meisten Sägeelemente symmetrisch in Bezug auf die Führungseinrichtung angeordnet bzw. anordbar, da die Sägeelemente 2 mittels einer nicht näher gezeigten Stelleinrichtung quer zur Durchlaufrichtung verstellbar sind.

Zusätzlich zu den Sägeelementen 2 kann die Durchlaufsägevorrichtung stromaufwärts angeordnete Fräselemente besitzen, um die Längskanten der Werkstücke entsprechend zu bearbeiten.

In Durchlaufrichtung stromaufwärts der Führungseinrichtung 10 ist ferner eine Ausrichtstation 20 angeordnet, die in Fig. 1 und Fig. 2 nur in groben Zügen schematisch dargestellt ist. Unterhalb der Ausrichtstation 20 befindet sich eine zweite Führungseinrichtung 20 mit Stützelementen 32, beispielsweise in Form von Riemenförderern, die dazu vorgesehen sind, die ankommenden Werkstücke, die von der Ausrichtstation 20 ausgerichtet werden, an die Führungseinrichtung 10 zu übergeben.

Weiterhin setzt sich die zweite Führungseinrichtung 30 in Durchlaufrichtung stromabwärts der Führungseinrichtung 10 fort und ist dort durch Stützelemente 34 gebildet, die beispielsweise als Rollenelemente einer Rollenbahn ausgeführt sind. Diese Rollenelemente können die von den Sägeelementen 2 der Durchlaufsägevorrichtung 1 erstellten Streifen übernehmen und sicher abführen.

Der Betrieb der erfindungsgemäßen Durchlaufsägevorrichtung vollzieht sich beispielsweise wie folgt. Auf den Förderelementen 32 werden zu sägende Werkstücke angefördert und im Bereich der Ausrichtstation 20, beispielsweise unter Berücksichtigung des Dekors sowie des gewünschten Schnittbildes, ausgerichtet. Anschließend werden die jeweiligen Werkstücke von den Stützelementen 32 an die Führungseinrichtung übergeben, sodass die Werkstücke zwischen der Stützeinrichtung 12 und der Oberdruckeinrichtung 14 der Führungseinrichtung aufgenommen und sicher geführt sowie in Durchlaufrichtung gefördert werden.

Im Zuge der Förderbewegung durch die Führungseinrichtung 10 passiert das jeweilige Werkstück zunächst die Fräser 8 und anschließend nacheinander die Gruppen von Sägeelementen 2, die sukzessive von außen nach innen Streifen von dem Werkstück abtrennen. Im Zuge dieser Bewegung bleibt im Bereich der Führungseinrichtung 10 bis zum Erreichen der am weitesten stromabwärts gelegenen Sägeelemente 2 ein Werkstückkörper, der sicher durch die Führungseinrichtung 10 geführt werden kann. Gleichzeitig werden die jeweils von außen her erstellten Streifen nach dem Sägevorgang sicher durch die Stützelemente 34 gestützt und geführt, sodass sich insgesamt eine geringe Verformung und unerwünschte Verschiebebewegung des sägenden Werkstücks mit entsprechend hoher Präzision des Sägevorgangs ergibt.

## Patentansprüche

1. Durchlaufsägevorrichtung (1) zum Aufteilen oder Nuten von bevorzugt platten- oder leistenförmigen Werkstücken, die bevorzugt zumindest teilweise aus Holz, Holzwerkstoffen, Kunststoff oder dergleichen bestehen, mit:
einer Führungseinrichtung (10) zum Führen und bevorzugt auch Fördern der Werkstücke in einer Durchlaufrichtung, wobei die Führungseinrichtung (10) eine Stützeinrichtung (12) und eine Oberdruckeinrichtung (14) aufweist, die derart angeordnet sind, um die Werkstücke gemeinsam zu führen, und
einer Mehrzahl von Sägeelementen (2), die jeweils um eine Drehachse drehend antreibbar sind, wobei
sich die Führungseinrichtung (10) bei Betrachtung senkrecht zur Durchlaufebene zumindest abschnittsweise in den Bereich neben mindestens ein Sägeelement (2), bei mehreren Sägeelementen (2) somit in den Bereich zwischen mindestens zwei Sägeelementen (2) erstreckt,
**dadurch gekennzeichnet, dass** zumindest einige Sägeelemente (2) quer zur Durchlaufrichtung verstellbar sind.

2. Durchlaufsägevorrichtung nach Anspruch 1, **dadurch gekennzeichnet, dass** die Führungseinrichtung (10) zumindest abschnittsweise mindestens ein Förderelement (16) aufweist, insbesondere mindestens ein endlos umlaufendes Förderelement.

3. Durchlaufsägevorrichtung nach Anspruch 1 oder 2, **dadurch gekennzeichnet, dass** sich mindestens ein Förderelement (16) bei Betrachtung senkrecht zur Durchlaufrichtung in den Bereich neben mindestens ein Sägeelement (2), bei mehreren Sägeelementen (2) somit in den Bereich zwischen mindestens zwei Sägeelementen (2) erstreckt.

4. Durchlaufsägevorrichtung nach Anspruch 2 oder 3, **dadurch gekennzeichnet, dass** das Förderelement (16) ausgewählt ist aus Riemen, Kette, Magnetkette, Band und Kombinationen hiervon.

5. Durchlaufsägevorrichtung nach einem der vorhergehenden Ansprüche, **dadurch gekennzeichnet, dass** die Führungseinrichtung (10) mindestens ein Geradführungselement (18) aufweist, das dazu vorgesehen ist, in eine im jeweiligen Werkstück vorgesehende Nut einzugreifen.

6. Durchlaufsägevorrichtung nach einem der vorhergehenden Ansprüche, **dadurch gekennzeichnet, dass** die Sägeelemente (2) im wesentlichen in einer Reihe, bevorzugt auf einer gemeinsamen Welle angeordnet sind.

7. Durchlaufsägevorrichtung nach einem der Ansprüche 1 bis 5, **dadurch gekennzeichnet, dass** die Sägeelemente (2) in mehreren Gruppen von Sägeelementen (2) angeordnet sind, deren Drehachsen in Durchlaufrichtung von einander beabstandet sind.

8. Durchlaufsägevorrichtung nach Anspruch 7, **dadurch gekennzeichnet, dass** bei einer gedachten Bewegung in Durchlaufrichtung die Sägeelemente (2) aufeinander folgender Gruppen von Sägeelementen einen schrittweise kleiner werdenden Abstand quer zur Durchlaufrichtung besitzen.

9. Durchlaufsägevorrichtung nach einem der vorhergehenden Ansprüche, **dadurch gekennzeichnet, dass** zumindest einige Sägeelemente (2) symmetrisch in Bezug auf die Führungseinrichtung (10) angeordnet sind.

10. Durchlaufsägevorrichtung nach einem der vorhergehenden Ansprüche, **dadurch gekennzeichnet, dass** in Durchlaufrichtung stromaufwärts der Führungseinrichtung (10) eine Ausrichtstation (20) angeordnet ist.

11. Durchlaufsägevorrichtung nach einem der vorhergehenden Ansprüche, **dadurch gekennzeichnet, dass** sie mindestens eine zweite Führungseinrichtung (30) aufweist, die in Durchlaufrichtung stromaufwärts und/oder stromabwärts angeordnet ist und zumindest Stützelemente (32, 34) aufweist.

## Claims

1. Continuous saw device (1) for dividing or grooving preferably panel-like or strip-like workpieces, which preferably consist at least partly of wood, derived timber products, plastic or the like, having: a guide device (10) for guiding and preferably also conveying the workpieces in one passage direction, wherein the guide device (10) has a supporting device (12) and a top-pressure device (14) which are arranged so as to guide the workpieces together, and a plurality of saw elements (2) which can be driven to be rotatable in each case about an axis of rotation, wherein the guide device (10) extends, on observation vertically to the passage plane, at least in some sections into the region next to at least one saw element (2), in the case of several saw elements (2) thus into the region between at least two saw elements (2), **characterised in that** at least some saw elements (2) can be moved transversely to the passage direction.

2. Continuous saw device according to claim 1, **characterised in that** the guide device (10) has at least in some sections at least one conveying element (16), in particular at least one continuously circulating conveying element.

3. Continuous saw device according to claim 1 or 2, **characterised in that** at least one conveying element (16) extends, on observation vertically to the passage direction, into the region next to at least one saw element (2), in the case of several saw elements (2) thus into the region between at least two saw elements (2).

4. Continuous saw device according to claim 2 or 3, **characterised in that** the conveying element (16) is selected from belt, chain, magnetic chain, strap and combinations thereof.

5. Continuous saw device according to one of the preceding claims, **characterised in that** the guide device (10) has at least one straight-line guide element (18) which is provided to engage in a groove provided in the particular workpiece.

6. Continuous saw device according to one of the preceding claims, **characterised in that** the saw elements (2) are arranged essentially in a row, preferably on a common shaft.

7. Continuous saw device according to one of claims 1 to 5, **characterised in that** the saw elements (2) are arranged in several groups of saw elements (2), the axes of rotation of which are distanced from one another in passage direction.

8. Continuous saw device according to claim 7, **characterised in that** in the case of a conceived movement in passage direction, the saw elements (2) of successive groups of saw elements have a distance which becomes smaller in steps transversely to the passage direction.

9. Continuous saw device according to one of the preceding claims, **characterised in that** at least some saw elements (2) are arranged symmetrically with reference to the guide device (10).

10. Continuous saw device according to one of the preceding claims, **characterised in that** an aligning station (20) is arranged upstream of the guide device (10) in passage direction.

11. Continuous saw device according to one of the preceding claims, **characterised in that** it has at least one second guide device (30) which is arranged upstream and/or downstream in passage direction and at least has supporting elements (32, 34).

## Revendications

1. Dispositif de scie de passage (1), pour séparer ou rainurer des pièces d'oeuvre, de préférence en forme de plaques ou de baguettes, composées de préférence au moins partiellement de bois, matériaux ligneux, matière synthétique ou analogue, comprenant :
un dispositif de guidage (10), pour guider et, de préférence, également transporter les pièces d'oeuvre dans un dispositif de passage, le dispositif de guidage (10) présentant un dispositif d'appui (12) et un dispositif de pressage par le dessus (14), disposés de manière à guider les pièces d'oeuvre conjointement, et
une pluralité d'éléments de scie (2), susceptibles d'être chacun entraînés en rotation autour d'un axe de rotation, où
le dispositif de guidage (10), en observant perpendiculairement au plan de passage, s'étend au moins par tronçons dans la zone se trouvant à côté d'au moins un élément de scie (2), en s'étendant donc dans la zone se trouvant entre au moins deux éléments de scie (2) dans le cas où il y a plusieurs éléments de scie (2),
**caractérisé en ce qu'**au moins quelques éléments de scie (2) sont réglables transversalement par rapport à la direction de passage.

2. Dispositif de scie de passage selon la revendication 1, **caractérisé en ce que** le dispositif de guidage (10) présente, au moins par tronçons, au moins un élément de transport (16), en particulier au moins un élément de transport circulant sans fin.

3. Dispositif de scie de passage selon la revendication 1 ou 2, **caractérisé en ce que**, en observant perpendiculairement à la direction de passage, au moins un élément de transport (16) s'étend dans la zone située à côté d'au moins un élément de scie (2), en s'étendant ainsi dans la zone se trouvant entre au moins deux éléments de scie (2) dans le cas où il y a plusieurs éléments de scie (2).

4. Dispositif de scie de passage selon la revendication 2 ou 3, **caractérisé en ce que** l'élément de transport (16) est sélectionné parmi une courroie, une chaîne, une chaîne à aimants, un ruban et des combinaisons de ceux-ci.

5. Dispositif de scie de passage selon l'une des revendications précédentes, **caractérisé en ce que** le dispositif de guidage (10) présente au moins un élément de guidage rectiligne (18), prévu pour s'engager dans une rainure prévue dans la pièce d'oeuvre respective.

6. Dispositif de scie de passage selon l'une des revendications précédentes, **caractérisé en ce que** les éléments de scie (2) sont disposés sensiblement en une rangée, de préférence sur un arbre commun.

7. Dispositif de scie de passage selon l'une des revendications 1 à 5, **caractérisé en ce que** les éléments de scie (2) sont disposés en plusieurs groupes d'éléments de scie (2), dont les axes de rotation sont espacés les uns des autres dans la direction de passage.

8. Dispositif de scie de passage selon la revendication 7, **caractérisé en ce que**, dans le cas d'un déplacement envisagé dans la direction de passage, les éléments de scie (2) de groupes d'éléments de scie se suivant les uns les autres sont espacés d'une distance allant en diminuant par degrés, transversalement à la direction de passage.

9. Dispositif de scie de passage selon l'une des revendications précédentes, **caractérisé en ce qu'**au moins quelques éléments de scie (2) sont disposés symétriquement par rapport au dispositif de guidage (10).

10. Dispositif de scie de passage selon l'une des revendications précédentes, **caractérisé en ce qu'**un poste d'alignement (20) est disposé en amont du dispositif de guidage (10), en observant dans la direction de passage.

11. Dispositif de scie de passage selon l'une des revendications précédentes, **caractérisé en ce qu'**il présente au moins un deuxième dispositif de guidage (30), disposé en amont et/ou en aval en observant dans le sens de passage, et présente au moins des éléments d'appui (32, 34).
